# EUROPÄISCHE PATENTSCHRIFT

(11) **EP 1 224 703 B1**
(45) Veröffentlichungstag und Bekanntmachung des Hinweises auf die Patenterteilung: **23.07.2003**
(21) Anmeldenummer: 00967569.5
(22) Anmeldetag: 13.09.2000
(51) Int. Cl.: H01M 8/04

(54) **VERFAHREN UND SYSTEM ZUM STARTEN EINES BRENNSTOFFZELLENSTAPELS EINER BRENNSTOFFZELLENANLAGE**
METHOD AND SYSTEM FOR STARTING A FUEL CELL STACK OF A FUEL CELL ARRANGEMENT
PROCEDE ET SYSTEME POUR FAIRE DEMARRER UN EMPILEMENT DE PILES A COMBUSTIBLE D'UNE CENTRALE A PILES A COMBUSTIBLE

(30) Priorität: 23.09.1999 DE 19945668
(43) Veröffentlichungstag der Anmeldung: 24.07.2002
(73) Patentinhaber: SIEMENS AKTIENGESELLSCHAFT, 80333 München (DE)
(72) Erfinder: MUND, Konrad, 91080 Uttenreuth (DE)
(86) Internationale Anmeldenummer: DE0003178
(87) Internationale Veröffentlichungsnummer: WO01022515

(56) Entgegenhaltungen:
- WO-A-97/48142

## Beschreibung

Die Erfindung betrifft ein Verfahren zum Starten eines Brennstoffzellenstapels aus mehreren Brennstoffzelleneinheiten, bei dem zumindest eine Brennstoffzelleneinheit gleichmäßig und rasch auf Betriebstemperatur gebracht wird. Daneben bezieht sich die Erfindung auch auf ein zugehöriges System mit Mitteln zur Durchführung des Verfahrens.

Bei den bekannten PEM-Brennstoffzellenstacks ist der Kaltstart, also das Anfahren der Anlage nach längerer Ruhephase eines der Probleme, die noch ungelöst sind. Dies trifft insbesondere die herkömmliche PEM-Brennstoffzelle, und zwar sowohl die wasserstoffbetriebene Brennstoffzelle als auch die Direkt-Methanol-Brennstoffzelle und auch besonders die Hochtemperatur-PEM-(HTM-)Brennstoffzelle, z.B. eine, die Phosphorsäure als Elektrolyten mit einem Gefrierpunkt von über 40°C enthält.

Mit der nicht vorveröffentlichten, älteren WO 00/59058 A wird ein Verfahren zum Kaltstarten einer Brennstoffzellenanlage vorgeschlagen, bei dem zunächst über einen in zumindest einer Zelle eingebrachten Heizdraht durch Stromfluss und Widerstandserwärmung ein minimaler Bereich der Zelle aufgeheizt wird, bevor ein autothermes Aufheizen der Zelle durch die Abwärme der Brennstoffzellenreaktion erfolgt. Nachteilig an diesem Verfahren ist, dass die Zelle ungleichmäßig aufgeheizt wird und dass ein zusätzlicher Heizdraht in die Zelle eingebaut werden muss. In der WO 97/48142 A ist eine Methode zum Starten eines Brennstoffzellensystems beschrieben, bei der von der Brennstoffzelle Strom an einen externen Verbraucher geliefert wird.

Die einfachste Möglichkeit zum Kaltstart einer Brennstoffzelle ist das Anlegen von Spannung aus einer elektrischen Batterie als Quelle, wobei aufgrund des ohm'schen Widerstandes ein Strom fließt und der resultierende Strom einen Spannungsabfall am Widerstand erzeugt. Der Spannungsabfall produziert Abwärme, die zum Aufheizen der Zelle genutzt werden kann. Insbesondere bei PEM-Brennstoffzellen mit Reaktionsräumen an den Elektroden und einem Katalysator und Kohlepapier speziell an der Anode wird es im kalten Zustand vor allem an der positiven Elektrode zu einer Sauerstoff-Abscheidung kommen, die aber überlagert ist von einer Korrosion des Kohlepapiers, des Katalysators und der Elektrodenhalterung. Diese Korrosion ist nachteilig und kann insbesondere die Brennstoffzelle zerstören.

Aufgabe der Erfindung ist es, die Nachteile des Standes der Technik zu überwinden und ein verbessertes Verfahren zum Starten eines Brennstoffzellenstapels anzugeben.

Die Aufgabe ist erfindungsgemäß durch die Maßnahmen des Patentanspruches 1 gelöst. Weiterbildungen des Verfahrens und spezifische Anwendungen sind in den Unteransprüchen angegeben.

Beim erfindungsgemäßen Verfahren wird zum Starten eines Brennstoffzellenstapels, bei dem an zumindest eine Brennstoffzelle des Stapels Spannung angelegt wird und in beiden Reaktionsräumen der Zelle nur Wasserstoff zur Verfügung steht, so dass an der Anode Wasserstoff verbraucht und an der Kathode Wasserstoff erzeugt wird.

Bei der Erfindung wird also vorteilhafterweise der Kathodengasfluss mit dem Anodengasfluss kombiniert, so dass der an der Kathode entwickelte Wasserstoff an den Anoden verbraucht wird.

Weitere Einzelheiten und Vorteile der Erfindung ergeben sich aus der nachfolgenden Beschreibung von Ausführungsbeispielen.

Dabei wird von einer bekannten PEM-Brennstoffzelle ausgegangen.

Eine PEM-Brennstoffzellenanlage enthält eine Vielzahl von Brennstoffzelleneinheiten, die zu einem Brennstoffzellenstapel geschichtet sind. Als "Stack" wird ein Stapel aus zumindest einer Brennstoffzelleneinheit bezeichnet. Eine Brennstoffzelleneinheit umfasst eine Membran-Elektroden-Einheit (MEA - Membran Electrode Assembly) mit elektrischen Leitungen, jeweils angrenzenden Reaktionskammern, einer Anoden- und einer Kathodenkammer und entsprechenden Gasversorgungsleitungen.

Sofern die PEM-Brennstoffzelle bei höheren Temperaturen betrieben werden soll, also als sog. HT-PEM- oder allgemeiner als HTM-Brennstoffzelle, stellt sich das Problem des Kaltstartens, um möglichst schnell die volle Betriebsbereitschaft zu gewährleisten. Dies wird dadurch erreicht, dass an eine oder mehreren Brennstoffzelleneinheiten eine Spannung angelegt wird. Gleichzeitig wird die Zufuhr von Sauerstoff als Oxidans für die Brennstoffzelle unterbrochen und also nur Wasserstoff eingespeist. Dadurch steht in beiden Reaktionsräumen der Brennstoffzelle nur Wasserstoff zur Verfügung. Dies bedeutet, dass an der Anode Wasserstoff verbraucht wird, wogegen an der Kathode Wasserstoff entsteht. Durch geeignete Kombination der Gasflüsse an der Anode und an der Kathode wird der an der Kathode entstehende Wasserstoff verbraucht, wobei Wärme frei wird. Diese Wärme dient zur Aufheizung des Brennstoffzellenstapels auf Betriebstemperatur.

Durch die vorgeschlagene Vorgehensweise kommt es bei Stromfluss nicht zu einer Elektrolyse und einer Sauerstoffabscheidung, die eine Korrosion des Katalysatorträgers, des Kohlepulvers, und/oder des Kohlepapiers zur Folge hätte, sondern zum Wasserstoffpumpen, das Wärme durch die Protonenwanderung, den Stromfluss an den beiden Elektroden und/oder durch die Polarisation der Elektroden liefert.

Nach einer Ausführungsform des Verfahrens wird der Strom zum Starten des Stacks zumindest teilweise aus einem Energiespeicher, wie z.B. einer Batterie und/oder einem Kondensator, der beispielsweise während der letzten Betriebsperiode der Anlage aufgeladen wurde, entnommen.

Nach einer Ausführungsform kommt der Strom zum Starten des Stacks zumindest teilweise von einem externen Netzanschluss.

Nach einer Ausführungsform des Verfahrens wird bereits beim Abschalten der Last die Zufuhr des Oxidans zum Kathodenraum der Brennstoffzelle unterbrochen. Bei dieser Ausführungsform ist es bevorzugt, dass der Kathodenraum beim Abschalten der Last mit Anodenrestgas gespült wird.

Nach einer Ausgestaltung ist zumindest ein Temperatursensor, der die aktuelle Temperatur und/oder Temperaturverteilung in einer Zelle und/oder im Stack mißt, vorgesehen, der mit einem Steuergerät verbunden ist, wobei nach einer vorgegebenen oder errechneten Temperatur, wie der Betriebstemperatur oder einer Mindesttemperatur, die ein autothermes Hochheizen gewährleistet, das Steuergerät automatisch den Zufluß von Wasserstoff an die Kathoden stoppt und die Oxidanszuleitungen zu den Kathodenräumen wieder öffnet, so daß der normale Brennstoffzellenbetrieb einsetzt.

Je nach Bedarf umfasst ein Stack auch ein Kühlsystem oder einen Teil eines Kühlsystems.

Die Erfindung ermöglicht ein elektrisches Kaltstarten eines Stacks über ein einfaches Anlegen von Spannung an die Elek troden zumindest einer Zelle verbunden mit dem Einleiten von Wasserstoff in den Kathodenraum. Die Elektroden und die Membran werden dann rasch elektrisch aufgeheizt, ohne dass Korrosionsprobleme auftreten.

## Patentansprüche

1. Verfahren zum Starten eines Brennstoffzellenstapels aus mehreren Brennstoffzelleneinheiten mit Anode und Kathode sowie jeweils einem Reaktionsraum, bei dem zumindest eine Brennstoffzelleneinheit gleichmäßig und rasch auf Betriebstemperatur gebracht wird, mit folgenden Verfahrensschritten:
- an zumindest eine Brennstoffzelleneinheit wird elektrische Spannung angelegt,
- es wird die Zufuhr von Oxidans zur Brennstoffzelleneinheit unterbrochen und nur Wasserstoff zugeführt,
- wodurch in beiden Reaktionsräumen der Brennstoffzelle nur Wasserstoff zur Verfügung steht, so dass an der Anode Wasserstoff verbraucht und an der Kathode Wasserstoff erzeugt wird.

2. Verfahren nach Anspruch 1, bei dem während des Kaltstartens des Brennstoffzellenstapels der Anoden- und der Kathodengasfluss derart kombiniert werden, dass an der Kathode entstehender Wasserstoff an der Anode wieder verbraucht wird.

3. Verfahren nach einem der Ansprüche 1 oder 2, bei dem elektrischer Strom zum Starten des Stacks zumindest teilweise aus einem elektrischen Energiespeicher, wie Batterien od. dgl., entnommen wird.

4. Verfahren nach einem der Ansprüche 1 oder 2, bei dem der elektrische Strom zum Starten des Stacks zumindest teilweise von einem externen Netzanschluss entnommen wird.

5. Verfahren nach einem der vorstehenden Ansprüche, bei dem beim Abschalten der Last die Zufuhr des Oxidans zum Kathodenraum der Brennstoffzelle unterbrochen wird.

6. Verfahren nach Anspruch 5, bei dem der Kathodenraum beim Abschalten der Last mit Anodenrestgas gespült wird.

7. Verfahren nach einem der vorstehenden Ansprüche, bei dem zumindest ein Temperatursensor, der die aktuelle Temperatur und/oder Temperaturverteilung in zumindest einer Zelle des Stacks misst, verbunden wird, der mit einem Steuergerät verbunden ist, wobei nach Erreichen einer vorgegebenen oder errechneten Temperatur durch das Steuergerät automatisch der Zufluss von Wasserstoff an die Kathode gestoppt und die Oxidanszuleitung zu dem Kathodenraum wieder geöffnet wird.

8. Verfahren nach einem der vorhergehenden Ansprüche, bei der die Brennstoffzelleneinheiten Teil einer PEM-, insbesondere einer HTM-Brennstoffzellenanlage sind.

## Claims

1. Method for starting a fuel cell stack comprising a plurality of fuel cell units having an anode and a cathode and in each case one reaction chamber, in which at least one fuel cell unit is uniformly and rapidly brought to operating temperature, comprising the following method steps:
- electric voltage is applied to at least one fuel cell unit,
- the supply of oxidizing agents to the fuel cell unit is interrupted, and only hydrogen is supplied,
- with the result that, in both reaction chambers of the fuel cell, only hydrogen is available, so that hydrogen is consumed at the anode and hydrogen is generated at the cathode.

2. Method according to Claim 1, in which, during the cold starting of the fuel cell stack, the anode gas flow and the cathode gas flow are combined in such a manner that hydrogen which forms at the cathode is consumed again at the anode.

3. Method according to one of Claims 1 or 2, in which electric current for starting the stack is at least partially taken from an electrical energy store, such as batteries or the like.

4. Method according to one of Claims 1 or 2, in which the electric current for starting the stack is at least partially taken from an external mains connection.

5. Method according to one of the preceding claims, in which, when the load is being switched off, the supply of oxidizing agent to the cathode chamber of the fuel cell is interrupted.

6. Method according to Claim 5, in which the cathode chamber is purged with residual anode gas when the load is being switched off.

7. Method according to one of the preceding claims, in which at least one temperature sensor, which measures the current temperature and/or temperature distribution in at least one cell of the stack, is connected, which is connected to a control unit, and, after a predetermined or calculated temperature has been reached, the control unit automatically stops the supply of hydrogen to the cathode and the oxidizing agent feed line to the cathode chamber is opened again.

8. Method according to one of the preceding claims, in which the fuel cell units are part of a PEM, in particular an HTM, fuel cell installation.

## Revendications

1. Procédé pour faire démarrer un empilement de piles à combustible constitué de plusieurs unités de piles à combustible ayant une anode et une cathode ainsi que, respectivement, une chambre de réaction, dans lequel on met au moins une unité de piles à combustible uniformément et rapidement à une température de fonctionnement comprenant les stades de procédé suivants :
- on applique une tension électrique à au moins une unité de piles à combustible,
- on interrompt l'envoi d'oxydant à l'unité de piles à combustible et on n'y envoie que de l'hydrogène,
- en sorte que l'on ne dispose dans les deux chambres de réaction de la pile à combustible que d'hydrogène, de sorte que de l'hydrogène est consommé à l'anode et que de l'hydrogène est produit à la cathode.

2. Procédé suivant la revendication 1, dans lequel pendant le démarrage à froid de l'empilement de piles à combustible, le flux gazeux à l'anode et le flux gazeux à la cathode sont combinés de façon à ce que de l'hydrogène créé à la cathode soit consommé à nouveau à l'anode.

3. Procédé suivant l'une des revendications 1 ou 2, dans lequel on prélève du courant électrique pour faire démarrer l'empilement au moins en partie d'un accumulateur électrique d'énergie, comme des générateurs électrochimiques ou analogues.

4. Procédé suivant l'une des revendications 1 ou 2, dans lequel on prélève du courant électrique pour faire démarrer l'empilement au moins en partie d'une connexion extérieure à un réseau.

5. Procédé suivant l'une des revendications précédentes, dans lequel, lorsque la charge est débranchée, on interrompt l'envoi d'oxydant à la chambre de cathode de la pile à combustible.

6. Procédé suivant la revendication 5, dans lequel on balaye la chambre de cathode, lorsque la charge est débranchée, par du gaz restant d'anode.

7. Procédé suivant l'une des revendications précédentes, dans lequel on relie au moins un capteur de température, qui mesure la température instantanée et/ou la répartition instantanée de température dans au moins une pile de l'empilement, le capteur étant relié à un appareil de commande et après obtention d'une température prescrite ou calculée, on arrête par l'appareil de commande automatiquement l'envoi d'hydrogène à la cathode et l'on ouvre à nouveau le conduit pour l'oxydant allant à la chambre de cathode.

8. Procédé suivant l'une des revendications précédentes, dans lequel les unités de piles à combustible font partie d'une centrale à piles à combustible PEM, notamment d'une centrale à piles à combustible HTM.
